# FASCICULE DE BREVET EUROPEEN

(11) **EP 3 123 008 B1**
(45) Date de publication et mention de la délivrance du brevet: **16.05.2018**
(21) Numéro de dépôt: 15717554.8
(22) Date de dépôt: 20.03.2015
(51) Int. Cl.: F02C 3/10, F02C 3/113

(54) **TURBOMOTEUR COMPRENANT UN DISPOSITIF DE COUPLAGE MÉCANIQUE COMMANDÉ, HÉLICOPTÈRE EQUIPÉ D'UN TEL TURBOMOTEUR ET PROCÉDÉ D'OPTIMISATION DU RÉGIME DE SUPER-RALENTI A PUISSANCE NULLE D'UN TEL HÉLICOPTÈRE**
WELLENTURBINENTRIEBWERK MIT EINER GESTEUERTEN MECHANISCHEN KUPPLUNGSVORRICHTUNG, MIT SOLCH EINEM WELLENTURBINENTRIEBWERK AUSGESTATTETER HELIKOPTER UND VERFAHREN ZUR OPTIMIERUNG DER NULLLEISTUNGS-HOCHLEERLAUFGESCHWINDIGKEIT SOLCH EINES HELIKOPTERS
TURBOSHAFT ENGINE COMPRISING A CONTROLLED MECHANICAL COUPLING DEVICE, HELICOPTER EQUIPPED WITH SUCH A TURBOSHAFT ENGINE, AND METHOD FOR OPTIMISING THE ZERO-POWER SUPER-IDLE SPEED OF SUCH A HELICOPTER

(30) Priorité: 27.03.2014 FR 1452654
(43) Date de publication de la demande: 01.02.2017
(73) Titulaire: Safran Helicopter Engines, 64510 Bordes (FR)
(72) Inventeur: MARCONI, Patrick, F-64110 Gelos (FR); THIRIET, Romain, F-64110 Jurancon (FR); SERGHINE, Camel, F-64510 Boeil-bezing (FR)
(74) Mandataire: Gevers & Orès
(86) Numéro de dépôt international: PCT/FR2015/050701
(87) Numéro de publication internationale: WO 2015/145045

(56) Documents cités:
- WO-A1-2009/118298
- WO-A2-2012/059671
- JP-A- 2001 193 475
- US-A- 3 237 404
- US-A- 3 660 976

## Description

### 1. Domaine technique de l'invention

L'invention concerne un turbomoteur destiné à équiper un hélicoptère multi-moteur, en particulier bimoteur. L'invention concerne également un procédé d'optimisation du régime de super-ralenti à puissance nulle d'un tel hélicoptère multi-moteur, en particulier bimoteur.

### 2. Arrière-plan technologique

Un hélicoptère est en général équipé d'au moins deux turbomoteurs qui fonctionnent à des régimes qui dépendent des conditions de vol de l'hélicoptère. Dans tout le texte qui suit, un hélicoptère est dit en situation de vol de croisière lorsqu'il évolue dans des conditions normales, en régime connu sous l'acronyme anglais AEO (All Engines Operative), au cours de toutes les phases du vol, hors phases transitoires de décollage, d'atterrissage ou de vol stationnaire. Dans tout le texte qui suit, un hélicoptère est dit en situation critique de vol lorsqu'il est nécessaire qu'il dispose de la puissance totale installée, c'est-à-dire dans les phases transitoires de décollage, de montée, d'atterrissage et de régime dans lequel un des turbomoteurs est défaillant, désigné par l'acronyme anglais OEI (One Engine Inoperative).

Il est connu que lorsque l'hélicoptère est en situation de vol de croisière, les turbomoteurs fonctionnent à des niveaux faibles de puissance, inférieurs à leur puissance maximale continue (ci-après, PMC). Dans certaines configurations, la puissance fournie par les turbomoteurs, lors d'un vol de croisière, peut être inférieure à 50 % de la puissance maximale de décollage (ci-après, PMD). Ces faibles niveaux de puissance entraînent une consommation spécifique (ci-après, Cs) définie comme le rapport entre la consommation horaire de carburant par la chambre de combustion du turbomoteur et la puissance fournie par ce turbomoteur, supérieure de l'ordre de 30% à la Cs de la PMD, et donc une surconsommation en carburant en vol de croisière.

Enfin, lors des phases d'attente au sol, les pilotes préfèrent généralement mettre les différents turbomoteurs au ralenti afin d'être sûrs de pouvoir les redémarrer. Les turbomoteurs continuent alors de consommer du carburant bien qu'ils ne fournissent aucune puissance.

D'autre part, les turbomoteurs sont également surdimensionnés pour pouvoir assurer le vol dans tout le domaine de vol spécifié par l'avionneur et notamment le vol à des altitudes élevées et par temps chaud. Ces points de vol, très contraignants, notamment lorsque l'hélicoptère a une masse proche de sa masse maximale de décollage, ne sont rencontrés que dans certains cas d'utilisation de certains hélicoptères. De ce fait, certains turbomoteurs, bien que dimensionnés pour pouvoir fournir de telles puissances ne voleront jamais dans de telles conditions.

Ces turbomoteurs surdimensionnés sont pénalisants en termes de masse et de consommation de carburant. Afin de réduire cette consommation dans tous les cas de vol décrits ci-dessus (vol de croisière, régime OEI, taxiing, vol stationnaire ou attente au sol), il est possible de placer un des turbomoteurs en régime dit de veille. Le ou les moteurs actifs fonctionnent alors à des niveaux de puissance plus élevés pour fournir toute la puissance nécessaire et donc à des niveaux de Cs plus favorables.

Un turbomoteur d'hélicoptère comprend de manière connue un générateur de gaz et une turbine libre alimentée par le générateur de gaz pour fournir de la puissance. Le générateur de gaz se compose classiquement de compresseurs d'air alimentant une chambre de combustion de carburant dans l'air comprimé qui délivrent des gaz chaud à des turbines de détente partielle de gaz qui entraînent en rotation les compresseurs via des arbres d'entraînement. Les gaz entraînent ensuite la turbine libre de transmission de puissance. La turbine libre transmet la puissance au rotor de l'hélicoptère par le biais d'une boite de transmission.

Les demandeurs ont proposé dans les demandes FR1151717 et FR1359766, des procédés d'optimisation de la consommation spécifique des turbomoteurs d'un hélicoptère par la possibilité de placer au moins un turbomoteur dans un régime de vol stabilisé, dit continu, et au moins un turbomoteur dans un régime de veille particulier duquel il peut sortir de manière urgente ou normale, selon les besoins. Une sortie du régime de veille est dite normale lorsqu'un changement de situation de vol impose l'activation du turbomoteur en veille, par exemple lorsque l'hélicoptère va passer d'une situation de vol de croisière à une phase d'atterrissage. Une telle sortie de veille normale s'effectue sur une durée de 10s à 1 min. Une sortie du régime de veille est dite urgente lorsqu'une panne ou un déficit de puissance du moteur actif intervient ou que les conditions de vol deviennent soudainement difficiles. Une telle sortie de veille d'urgence s'effectue sur une durée inférieure à 10s.

Les demandeurs ont notamment proposé les deux régimes de veille suivants :
- un régime de veille, dit super-ralenti usuel, dans lequel la chambre de combustion est allumée et l'arbre du générateur de gaz tourne à une vitesse comprise entre 20 et 60% de la vitesse nominale,
- un régime de veille, dit super-ralenti assisté, dans lequel la chambre de combustion est allumée et l'arbre du générateur de gaz tourne, assisté mécaniquement, à une vitesse comprise entre 20 et 60% de la vitesse nominale.

Le régime de super-ralenti usuel est pénalisé par des températures de fonctionnement qui deviennent de plus en plus élevées à mesure que l'on cherche à atteindre un ralenti de plus en plus bas, ce qui présente pourtant l'intérêt de minimiser sa consommation de carburant dans ce régime.

Le régime de super-ralenti assisté permet de pallier ce problème de température de fonctionnement tout en réduisant encore la consommation de carburant. Cela étant, il impose le recours à une machine d'entraînement, électrique pneumatique ou hydraulique et d'un couplage correspondant.

Aussi, il se pose maintenant le problème technique d'obtenir un régime de super-ralenti qui ne soit plus assisté mécaniquement et moins limité par les températures du turbomoteur. Il se pose donc le problème technique de fournir un turbomoteur permettant de proposer un tel régime de super-ralenti amélioré.

Des documents US 3,660,976 et US 3,237,404 on connaît des turbomoteurs comprenant des dispositifs de couplage d'un générateur de gaz et une turbine libre.

### 3. Objectifs de l'invention

L'invention vise à fournir un turbomoteur qui puisse présenter un régime de super ralenti, dans lequel la chambre de combustion est allumée et l'arbre du générateur de gaz tourne à une vitesse comprise entre 20 et 60% de la vitesse nominale, qui soit moins pénalisé par les températures de fonctionnement du turbomoteur, ni assisté mécaniquement par un dispositif d'entraînement externe.

L'invention vise donc à fournir un turbomoteur qui puisse présenter un nouveau régime de super ralenti.

L'invention vise aussi à fournir un hélicoptère bimoteur comprenant au moins un turbomoteur selon l'invention.

L'invention vise aussi à fournir un procédé d'optimisation du régime de super-ralenti à puissance nulle d'un hélicoptère bimoteur selon l'invention comprenant au moins un turbomoteur selon l'invention.

### 4. Exposé de l'invention

Pour ce faire, l'invention concerne un turbomoteur comprenant un générateur de gaz adapté pour être mis en rotation et une turbine libre entraînée en rotation par les gaz dudit générateur de gaz.

Un turbomoteur selon l'invention est caractérisé en ce qu'il comprend un dispositif de couplage mécanique commandé dudit générateur de gaz et de ladite turbine libre adapté pour lier mécaniquement et sur commande ledit générateur de gaz et ladite turbine libre dès que la vitesse de rotation dudit générateur de gaz atteint une vitesse de seuil prédéterminée.

Un turbomoteur selon l'invention permet donc de lier mécaniquement et sur commande le générateur de gaz et la turbine libre. La commande de liaison du générateur de gaz et de la turbine libre est fonction de la vitesse de rotation du générateur de gaz. Un turbomoteur selon l'invention permet donc une assistance mécanique à la rotation du générateur de gaz qui peut ne pas faire appel à une machine d'entraînement externe. La puissance est directement dérivée de la turbine libre du turbomoteur et transmise par le biais du dispositif de couplage. Selon l'invention, le dispositif de couplage mécanique commandé est adapté pour lier mécaniquement et sur commande ledit générateur de gaz et ladite turbine libre dès que ladite vitesse de rotation dudit générateur de gaz est inférieure à ladite vitesse de seuil prédéterminée et pour séparer sur commande ledit générateur de gaz et ladite turbine libre dès que ladite vitesse de rotation dudit générateur de gaz est supérieure à ladite vitesse de seuil prédéterminée.

Ainsi, selon l'invention, le dispositif de couplage commandé permet de forcer l'entraînement du générateur de gaz par la turbine libre lorsque le générateur de gaz tourne à une vitesse inférieure à une vitesse de seuil prédéterminée. En d'autres termes, un turbomoteur selon l'invention équipé d'un dispositif de couplage mécanique commandé du générateur de gaz et de la turbine libre permet de basculer, sur commande, le turbomoteur d'une configuration (ou mode) dite de turbines libres, dans laquelle le générateur de gaz et la turbine libre sont mécaniquement indépendants, à une configuration (ou mode) dite de turbines liées, dans laquelle le générateur de gaz et la turbine libre sont mécaniquement liés.

La vitesse de seuil prédéterminée est avantageusement choisie de telle sorte que la liaison mécanique entre le générateur de gaz et la turbine libre ne soit possible que lorsque le turbomoteur est en régime de super-ralenti, c'est-à-dire lorsque la turbine libre ne produit plus de couple et tourne librement à une vitesse inférieure à celle de l'entrée de la boite de transmission de l'aéronef à laquelle elle est reliée. En forçant la turbine libre à tourner moins vite que sa vitesse d'équilibre à couple nul, celle-ci va alors fournir un couple moteur qui va permettre au générateur de gaz d'entraîner le compresseur, ce qui correspond alors à une configuration de turbines liées.

Un turbomoteur selon l'invention peut donc être placé dans un régime de super ralenti au cours duquel la turbine libre entraîne le générateur de gaz, ce qui permet de diminuer les températures des parties chaudes du turbomoteur et de réduire la consommation de carburant.

Avantageusement et selon l'invention, la vitesse de seuil est fonction d'une vitesse nominale dudit générateur de gaz.

Selon cet aspect de l'invention, la vitesse de seuil est directement dépendante de la vitesse nominale du générateur de gaz.

Avantageusement et selon cette variante, la vitesse de seuil est choisie dans l'intervalle [20%.N1, 60%.N1], où N1 est ladite vitesse nominale dudit générateur de gaz.

En d'autres termes, un turbomoteur selon cette variante bascule d'un mode turbines libres à un mode turbines liées dès que la vitesse de rotation du générateur de gaz devient inférieure à une valeur seuil correspondant à un régime de ralenti (défini ici comme 20% à 60% de la vitesse nominale du générateur de gaz).

Avantageusement et selon l'invention, ledit dispositif de couplage mécanique commandé comprend :
- des moyens de lecture d'une information représentative de ladite vitesse de rotation dudit générateur de gaz,
- des moyens d'accouplement mécanique réversible entre un arbre relié mécaniquement audit générateur de gaz et un arbre relié mécaniquement à ladite turbine libre,
- des moyens de commande desdits moyens d'accouplement en fonction de ladite information représentative de ladite vitesse de rotation dudit générateur de gaz et de ladite vitesse de seuil.

Avantageusement et en variante, le dispositif de couplage comprend en outre des moyens d'autorisation desdits moyens d'accouplement par une commande provenant d'un calculateur moteur ayant préalablement demandé une mise en veille du moteur.

Selon cet aspect de l'invention, des moyens de lecture permettent d'acquérir une information représentative de la vitesse de rotation du générateur de gaz. Des moyens de commande permettent d'interpréter cette information et de la comparer avec la vitesse de seuil. Si la vitesse de rotation est déterminée comme étant inférieure à la vitesse de seuil et le calculateur du moteur a bien demandé préalablement une mise en veille du moteur, une commande est envoyée à des moyens d'accouplement qui assurent l'accouplement mécanique entre le générateur de gaz et la turbine libre, basculant ainsi le turbomoteur dans un mode de turbines liées. Cet accouplement mécanique est réalisé par le biais d'arbres intermédiaires reliés mécaniquement respectivement au générateur de gaz et à la turbine libre.

Dans tout le texte qui suit, le terme « arbre » désigne un moyen adapté pour être mis en rotation et pour transmettre un couple. Il peut donc s'agir d'un arbre s'étendant longitudinalement, mais également d'un simple pignon d'engrenage.

Ces moyens d'accouplement peuvent être de tous types. Selon une variante avantageuse, ces moyens d'accouplement sont choisis dans le groupe comprenant au moins un embrayage à friction, un crabot et un crabot équipé d'un synchroniseur.

Un crabot équipé d'un synchronisateur permet, préalablement au crabotage, de synchroniser les vitesses respectives des arbres, ce qui permet une meilleure gestion du différentiel de vitesse qu'en l'absence d'un synchronisateur.

Avantageusement, ces moyens d'accouplement sont configurés pour permettre un glissement temporaire entre l'arbre relié mécaniquement audit générateur de gaz et l'arbre relié mécaniquement à ladite turbine libre pendant une phase préliminaire d'accouplement.

Avantageusement, un turbomoteur selon l'invention comprend en outre un dispositif de couplage mécanique spontané dudit générateur de gaz et de ladite turbine libre adapté pour lier mécaniquement et spontanément ledit générateur de gaz et ladite turbine libre dès que le rapport de la vitesse de rotation dudit générateur de gaz par la vitesse de rotation de ladite turbine libre atteint une valeur seuil prédéterminée. Cette valeur seuil du rapport de la vitesse de rotation dudit générateur de gaz par la vitesse de rotation de ladite turbine libre est notablement inférieur à celui qui est obtenu lors de l'activation du dispositif de couplage commandé de sorte que lorsque la turbine libre tourne à sa vitesse nominale en étant couplée au rotor le générateur de gaz ne tourne pas plus de 10 à 20 % plus vite que sa vitesse de rotation au ralenti vol.

Un turbomoteur selon un autre mode de réalisation comprend, en plus d'un dispositif de couplage mécanique commandé sur l'atteinte d'un seuil de vitesse du générateur de gaz, un dispositif de couplage mécanique spontané. La liaison mécanique du générateur de gaz et de la turbine libre par le biais du dispositif de couplage mécanique spontané n'est pas fonction de la vitesse de rotation du générateur de gaz, comme pour le dispositif de couplage mécanique commandé, mais du rapport de la vitesse de rotation du générateur de gaz par la vitesse de rotation de la turbine libre.

Un turbomoteur selon cette variante de l'invention permet donc de forcer l'entraînement du générateur de gaz par la turbine libre lorsque des conditions prédéterminées sont atteintes. En d'autres termes, un turbomoteur selon l'invention équipé d'un dispositif de couplage mécanique spontané du générateur de gaz et de la turbine libre permet de basculer automatiquement et spontanément, sans dispositif d'assistance et/ou de commande extérieure, le turbomoteur de la configuration dite de turbines libres à la configuration dite de turbines liées. Ainsi ce basculement d'un mode libre à un mode lié n'est pas uniquement fonction de la vitesse de rotation du générateur de gaz, mais également du rapport de la vitesse de rotation du générateur de gaz par la vitesse de rotation de la turbine libre.

Avantageusement et selon cette variante, ledit dispositif de couplage mécanique spontané est adapté pour lier mécaniquement et spontanément ledit générateur de gaz et ladite turbine libre dès que ledit rapport des vitesses est inférieur à ladite valeur seuil prédéterminée et pour séparer spontanément ledit générateur de gaz et ladite turbine libre dès que ledit rapport est supérieur à ladite valeur seuil prédéterminée.

Avantageusement, le fonctionnement en turbines liées au voisinage du ralenti améliore les performances transitoires, en particulier en cas de chute de tours du rotor lors d'une mise de pas rapide. En effet, le générateur de gaz tourne alors à une vitesse supérieure à sa vitesse nécessaire à puissance nulle en mode turbine libre. Le moteur produit donc très rapidement une puissance conséquente sur la turbine libre, correspondant à la valeur qu'aurait le turbomoteur à turbine libre à cette vitesse, augmentée de la puissance supplémentaire due au fait qu'on atteint rapidement la limite d'accélération, avant même que la turbine à gaz ait commencé à accélérer.

Avantageusement et selon cette variante, ledit dispositif de couplage mécanique spontané comprend au moins une roue libre reliant un premier arbre présentant avec ledit générateur de gaz un rapport de réduction K1 et un deuxième arbre présentant avec la turbine libre un rapport de réduction K2, ladite roue libre étant agencée de telle sorte que ladite turbine libre entraîne spontanément ledit générateur de gaz, par le biais desdits arbres et de ladite roue libre, dès que ledit rapport des vitesses est inférieur au rapport K2/K1.

Avantageusement, un turbomoteur selon cette variante comprend une génératrice-démarreur solidaire d'un arbre intermédiaire et ledit dispositif de couplage mécanique spontané comprend deux roues libres reliant respectivement ledit arbre intermédiaire avec ledit premier arbre présentant avec ledit générateur de gaz un rapport de réduction K1 et ledit deuxième arbre présentant avec la turbine libre un rapport de réduction K2, lesdites roues étant agencées de telle sorte que ladite turbine libre entraîne spontanément ledit générateur de gaz, par le biais desdits arbres et desdites roues libres, dès que ledit rapport des vitesses est inférieur au rapport K2/K1. En outre, ladite génératrice-démarreur solidaire de l'arbre intermédiaire est ainsi entraînée par la turbine libre lorsque ladite génératrice-démarreur fonctionne en génératrice et ladite génératrice-démarreur entraine le générateur de gaz lorsque ladite génératrice-démarreur fonctionne en démarreur.

L'invention concerne également un hélicoptère bimoteur caractérisé en ce qu'il comprend au moins un turbomoteur selon l'invention.

L'invention concerne également un procédé d'optimisation du régime de super-ralenti à puissance nulle d'un hélicoptère bimoteur comprenant au moins un turbomoteur comprenant un générateur de gaz adapté pour être mis en rotation et une turbine libre entraînée en rotation par les gaz dudit générateur de gaz, caractérisé en qu'il comprend une étape de couplage mécanique commandé dudit générateur de gaz et de ladite turbine libre dès que la vitesse de rotation dudit générateur de gaz atteint une vitesse de seuil prédéterminée.

Avantageusement, un procédé selon l'invention, comprend en outre une étape de couplage mécanique spontané dudit générateur de gaz et de la turbine libre dès que rapport de la vitesse de rotation dudit générateur de gaz par la vitesse de rotation de ladite turbine libre atteint une valeur seuil prédéterminée.

L'invention concerne également un turbomoteur, un hélicoptère et un procédé d'optimisation du régime de super-ralenti à puissance nulle, caractérisés en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique d'un turbomoteur selon un premier mode de réalisation de l'invention,
- la figure 2 est une vue schématique d'un turbomoteur selon un deuxième mode de réalisation de l'invention,
- la figure 3 est une vue schématique d'un turbomoteur selon un troisième mode de réalisation de l'invention.

### 6. Description détaillée d'un mode de réalisation de l'invention

Un turbomoteur selon l'invention comprend, tel que représenté sur les figures, un générateur 5 de gaz et une turbine 6 libre alimentée par le générateur 5 de gaz. Un générateur 5 de gaz comprend de manière connue au moins un compresseur 7 d'air alimentant une chambre 8 de combustion d'un carburant dans l'air comprimé qui délivre des gaz chauds à au moins une turbine 9 de détente partielle des gaz qui entraîne en rotation le compresseur 7 via un arbre 10 d'entraînement. Les gaz entraînent en outre la turbine 6 libre de transmission de puissance. Cette turbine 6 libre comprend un arbre 11 de transmission de puissance reliée à une boite de transmission de puissance, non représentée sur les figures, par le biais d'une roue libre 12. Cette roue libre 12 permet d'empêcher qu'un blocage mécanique du turbomoteur entraîne un blocage mécanique de la boite de transmission de puissance et par extension du rotor de l'hélicoptère sur lequel ce turbomoteur est monté.

Un turbomoteur selon l'invention comprend en outre un dispositif 40 de couplage mécanique commandé du générateur 5 de gaz et de la turbine 6 libre adapté pour lier mécaniquement et sur commande le générateur 5 de gaz et la turbine 6 libre dès que la vitesse NGG de rotation du générateur de gaz est inférieure à une vitesse de seuil. Dans tout le texte, la vitesse NGG de rotation du générateur de gaz désigne la vitesse de rotation de l'arbre 10 d'entraînement du générateur de gaz. De la même manière, la vitesse NTL de rotation de la turbine libre désigne la vitesse de rotation de l'arbre 11 d'entraînement de la turbine libre.

Cette vitesse de seuil est par exemple fixée à 30%.N1, où N1 est la vitesse de rotation nominale du générateur de gaz. En d'autres termes, le dispositif 40 de couplage mécanique commandé est adapté pour assurer le couplage entre le générateur de gaz et la turbine libre lorsque le turbomoteur est dans un régime de ralenti. Dès que la vitesse de rotation NGG du générateur de gaz est supérieure à la vitesse de seuil, le générateur de gaz et la turbine libre sont indépendants mécaniquement l'un de l'autre.

Selon le mode de réalisation des figures, le dispositif 40 de commande comprend un arbre 42 relié mécaniquement au générateur 5 de gaz et un arbre 43 relié mécaniquement à la turbine libre. Le dispositif 40 de commande comprend en outre des moyens de lecture d'une information représentative de ladite vitesse NGG de rotation du générateur 5 de gaz. Ces moyens de lecture comprennent par exemple un capteur de vitesse monté sur l'arbre du générateur 5 de gaz de sorte que l'information fournie est directement la mesure de la vitesse du générateur 5 de gaz. Il comprend en outre des moyens 41 d'accouplement réversible des deux arbres 42, 43 et des moyens de commande de ces moyens 41 d'accouplement.

Selon un mode de réalisation, les moyens 41 d'accouplement comprennent un embrayage à friction, tel qu'un embrayage centrifuge, un embrayage à cône, un embrayage mono-disque ou un embrayage multidisques. De tels moyens d'accouplement présentent l'avantage de permettre un glissement entre les arbres dans une première phase d'accouplement. Selon un mode de réalisation, les moyens de commande de cet embrayage à friction sont des moyens de commande hydraulique ou électrique, du type actionneur. En outre, les moyens de commande comprennent un module adapté pour recevoir la mesure de la vitesse du générateur de gaz et la comparer avec la vitesse de seuil. Un tel module est par exemple un élément logiciel, un sous-ensemble d'un programme logiciel, ou un élément matériel, ou une combinaison d'un élément matériel et d'un sous-programme logiciel.

Selon un autre mode de réalisation, les moyens 41 d'accouplement comprennent un crabot, éventuellement équipé d'un synchroniseur qui permet une meilleure gestion du différentiel de vitesse, permettant d'accoupler directement les arbres 42 et 43.

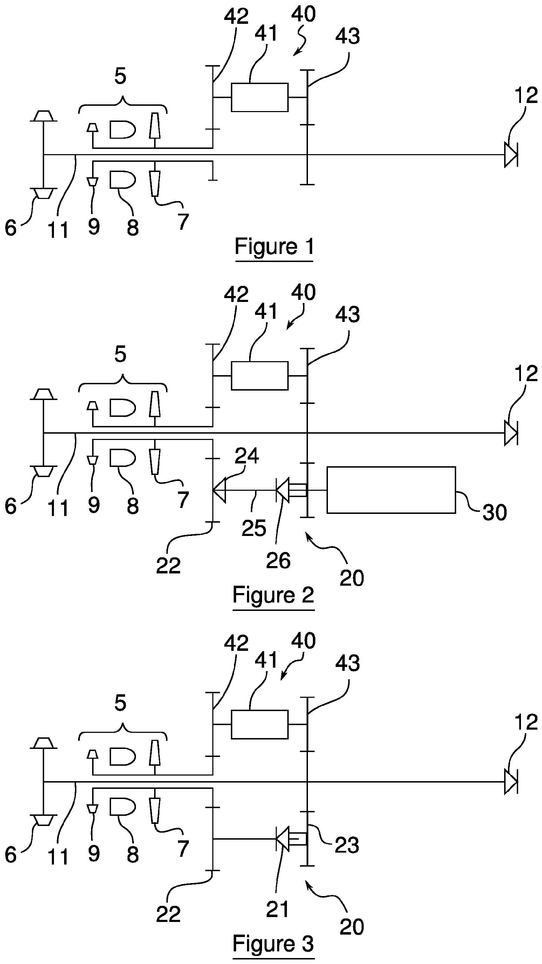

Les figures 2 et 3 présentent deux modes de réalisation dans lesquels le turbomoteur comprend en outre un dispositif 20 de couplage mécanique spontané entre le générateur 5 de gaz et la turbine 6 libre. Ce dispositif 20 de couplage mécanique spontané est adapté pour lier mécaniquement et spontanément le générateur 5 de gaz et la turbine 6 libre dès que le rapport de la vitesse de rotation de l'arbre 10 du générateur 5 de gaz par la vitesse de rotation de l'arbre 11 de la turbine 6 libre est inférieur à une valeur seuil prédéterminée et pour séparer spontanément le générateur 5 de gaz et la turbine 6 libre dès que le rapport est supérieur à cette valeur seuil prédéterminée.

Selon un premier mode de réalisation et tel que représenté sur la figure 3, ce dispositif 20 de couplage mécanique spontané comprend un arbre 22 relié mécaniquement à l'arbre 10 du générateur 5 de gaz. Ces arbres 22 et 10 présentent entre eux un rapport de réduction K1.

Le dispositif 20 de couplage mécanique spontané comprend en outre un arbre 23 relié mécaniquement à l'arbre 11 de la turbine 6 libre. Ces arbres 23 et 11 présentent entre eux un rapport de réduction K2.

Le dispositif 20 de couplage mécanique spontané comprend en outre une roue libre 21 agencée entre les arbres 22 et 23.

Dès lors, la vitesse de rotation de l'arbre 22 est égale à K1.NGG, où NGG est la vitesse de rotation de l'arbre 10 du générateur 5 de gaz.

La vitesse de rotation de l'arbre 23 est égale à K2.NTL, où NTL est la vitesse de rotation de l'arbre 11 de la turbine 6 libre.

La roue libre 21 est orientée de telle sorte que l'arbre 23 peut entraîner l'arbre 22 par l'intermédiaire de cette roue libre 21.

Si la vitesse de rotation de l'arbre 23 est inférieure à la vitesse de rotation de l'arbre 22, les deux arbres sont indépendants. Sinon, les deux arbres sont liés.

Autrement dit, les arbres sont indépendants si l'équation suivante est respectée : K2.NTL < K1.NGG. Les arbres sont donc indépendants si le rapport NGG/NTL > K2/K1.

Si le rapport de vitesse est inférieur ou égal à K2/K1, alors un couple moteur est transmis de la turbine 6 libre vers le générateur 5 de gaz.

Autrement dit, le dispositif 20 de couplage mécanique spontané décrit en lien avec la figure 3 permet de lier mécaniquement et spontanément le générateur 5 de gaz et la turbine 6 libre dès que le rapport NGG/NTL est inférieur ou égal à K2/K1, qui fait donc office de valeur seuil prédéterminée. Le dispositif permet aussi de séparer spontanément le générateur 5 de gaz et la turbine 6 libre dès que le rapport NGG/NTL devient supérieur à K2/K1.

Si la vitesse de rotation NGG du générateur 5 de gaz est inférieure à la vitesse de seuil, le dispositif 40 de couplage mécanique commandé assure le couplage mécanique du générateur 5 de gaz et de la turbine 6 libre par le biais des moyens 41 d'accouplement. Lorsque cet accouplement est effectif, le rapport NGG/NTL devient nettement supérieur à K2/K1. Le dispositif 20 de couplage mécanique spontané n'est donc pas actif et la roue libre 21 glisse. Les deux dispositifs de commande 20, 40 sont donc parfaitement compatibles l'un avec l'autre.

Selon un deuxième mode de réalisation et tel que représenté sur la figure 2, le turbomoteur comprend en outre une génératrice-démarreur 30. Dans ce cas, le dispositif de couplage comprend en plus des arbres 22 et 23 décrits en lien avec la figure 2, un arbre 25 intermédiaire solidaire de la génératrice-démarreur 30.

Le dispositif 20 de couplage comprend en outre une première roue libre 26 qui relie l'arbre 25 intermédiaire avec l'arbre 23. Il comprend en outre une seconde roue libre 24 qui relie l'arbre 25 intermédiaire avec l'arbre 22.

De la même manière que pour le mode de réalisation de la figure 3, la vitesse de rotation de l'arbre 22 est égale à K1.NGG et la vitesse de rotation de l'arbre 23 est égale à K2.NTL.

Les roues 26, 24 sont orientées de telle sorte que l'arbre 25 intermédiaire solidaire de la génératrice-démarreur 30 est adapté pour entraîner l'arbre 22, et l'arbre 23 est adapté pour entraîner l'arbre 25 intermédiaire solidaire de la génératrice-démarreur 30.

Les deux roues libres 26, 24 entraînent simultanément si le rapport NGG/NTL est égal à K2/K1.

Si le rapport NGG/NTL est inférieur ou égal à K2/K1, alors les arbres 10, 11 sont mécaniquement liés et un couple moteur est transmis de la turbine 6 libre vers le générateur 5 de gaz.

Si le rapport NGG/NTL est supérieur à K2/K1, alors les arbres sont mécaniquement indépendants. La génératrice-démarreur 30 est soit entraînée par la turbine libre (cas d'une fonction génératrice) ou entraîne la turbine à gaz (cas d'une fonction démarreur).

Autrement dit, le dispositif 20 de couplage mécanique spontané décrit en lien avec la figure 2 permet également de lier mécaniquement et spontanément le générateur 5 de gaz et la turbine 6 libre dès que le rapport NGG/NTL est inférieur ou égal à K2/K1. Le dispositif permet aussi de séparer spontanément le générateur 5 de gaz et la turbine 6 libre dès que le rapport NGG/NTL devient supérieur à K2/K1. En outre, dans ce mode de réalisation, la fonction génératrice et/ou démarreur est possible.

Si la vitesse de rotation NGG du générateur 5 de gaz est inférieure à la vitesse de seuil, le dispositif 40 de couplage mécanique commandé assure le couplage mécanique du générateur 5 de gaz et de la turbine 6 libre par le biais des moyens 41 d'accouplement. Lorsque cet accouplement est effectif, le rapport NGG/NTL devient nettement supérieur à K2/K1. Le dispositif 20 de couplage mécanique spontané n'est donc pas actif et au moins l'une des deux roues libres 21, 26 glisse. Les deux dispositifs de commande 20, 40 sont donc parfaitement compatibles l'un avec l'autre.

L'invention concerne également un procédé d'optimisation du régime de super-ralenti à puissance nulle d'un hélicoptère bimoteur comprenant au moins un turbomoteur selon l'un des modes de réalisation décrit.

Un tel procédé comprend donc une étape de couplage mécanique du générateur 5 de gaz et de la turbine 6 libre dès que la vitesse NGG de rotation du générateur 5 de gaz est inférieure à une vitesse de seuil prédéterminée.

Un procédé selon l'invention est avantageusement mis en oeuvre par un turbomoteur selon l'un des modes de réalisation décrits. Un turbomoteur selon l'un des modes de réalisation décrits met avantageusement en oeuvre un procédé selon l'invention.

## Revendications

1. Turbomoteur comprenant
un générateur (5) de gaz adapté pour être mis en rotation,
- une turbine (6) libre entraînée en rotation par les gaz dudit générateur de gaz, et
- un dispositif (40) de couplage mécanique commandé dudit générateur (5) de gaz et de ladite turbine (6) libre adapté pour lier mécaniquement et sur commande ledit générateur (5) de gaz et ladite turbine (6) libre dès que la vitesse de rotation dudit générateur (5) de gaz atteint une vitesse de seuil prédéterminée, **caractérisé en ce que** ledit dispositif (40) de couplage mécanique commandé est adapté pour lier mécaniquement et sur commande ledit générateur (5) de gaz et ladite turbine (6) libre dès que ladite vitesse (NGG) de rotation dudit générateur (5) de gaz est inférieure à ladite vitesse de seuil prédéterminée et pour séparer sur commande ledit générateur (5) de gaz et ladite turbine (6) libre dès que ladite vitesse (NGG) de rotation dudit générateur (5) de gaz est supérieure à ladite vitesse de seuil prédéterminée.

2. Turbomoteur selon la revendication précédente, **caractérisé en ce que** ladite vitesse de seuil est fonction d'une vitesse nominale dudit générateur (5) de gaz.

3. Turbomoteur selon la revendication 2, **caractérisé en ce que** ladite vitesse de seuil est choisie dans l'intervalle [20%.N1, 60%.N1], où N1 est ladite vitesse nominale dudit générateur de gaz.

4. Turbomoteur selon l'une des revendications 1 à 3, **caractérisé en ce que** ledit dispositif (40) de couplage mécanique commandé comprend :
- des moyens de lecture d'une information représentative de ladite vitesse (NGG) de rotation dudit générateur de gaz,
- des moyens (41) d'accouplement mécanique réversible entre un arbre (42) relié mécaniquement audit générateur de gaz et un arbre (43) relié mécaniquement à ladite turbine (6) libre,
- des moyens de commande desdits moyens (41) d'accouplement en fonction de ladite information représentative de ladite vitesse de rotation dudit générateur de gaz et de ladite vitesse de seuil.

5. Turbomoteur selon la revendication 4, **caractérisé en ce que** lesdits moyens (41) d'accouplement sont choisis dans le groupe comprenant au moins un embrayage à friction, un crabot, et un crabot équipé d'un synchroniseur.

6. Turbomoteur selon l'une des revendications 3 ou 4, **caractérisé en ce que** lesdits moyens (41) d'accouplement sont configurés pour permettre un glissement temporaire entre l'arbre (42) relié mécaniquement audit générateur (5) de gaz et l'arbre (43) relié mécaniquement à ladite turbine (6) libre pendant une phase préliminaire d'accouplement.

7. Turbomoteur selon l'une des revendications 1 à 6, **caractérisé en ce qu'**il comprend en outre un dispositif (20) de couplage mécanique spontané dudit générateur (5) de gaz et de ladite turbine (6) libre adapté pour lier mécaniquement et spontanément ledit générateur (5) de gaz et ladite turbine (6) libre dès que le rapport de la vitesse (NGG) de rotation dudit générateur (5) de gaz par la vitesse (NTL) de rotation de ladite turbine (6) libre atteint une valeur seuil prédéterminée.

8. Turbomoteur selon la revendication 7, **caractérisé en ce que** ledit dispositif (20) de couplage mécanique spontané est adapté pour lier mécaniquement et spontanément ledit générateur (5) de gaz et ladite turbine (6) libre dès que ledit rapport des vitesses est inférieur à ladite valeur seuil prédéterminée et pour séparer spontanément ledit générateur (5) de gaz et ladite turbine (6) libre dès que ledit rapport (NGG/NTL) est supérieur à ladite valeur seuil prédéterminée.

9. Turbomoteur selon l'une des revendications 7 ou 8, **caractérisé en ce que** ledit dispositif (20) de couplage mécanique spontané comprend au moins une roue (21) libre reliant un premier arbre (22) présentant avec ledit générateur de gaz un rapport de réduction K1 et un deuxième arbre (23) présentant avec la turbine (6) libre un rapport de réduction K2, ladite roue (21) libre étant agencée de telle sorte que ladite turbine (6) libre entraîne spontanément ledit générateur (5) de gaz, par le biais desdits arbres et de ladite roue (21) libre, dès que ledit rapport (NGG/NTL) des vitesses est inférieur au rapport K2/K1.

10. Turbomoteur selon la revendication 9, **caractérisé en ce qu'**il comprend une génératrice-démarreur (30) solidaire d'un arbre (25) intermédiaire et **en ce que** ledit dispositif (20) de couplage mécanique spontané comprend deux roues (24, 26) libres reliant respectivement ledit arbre (25) intermédiaire avec ledit premier arbre (22) présentant avec ledit générateur (5) de gaz un rapport de réduction K1 et ledit deuxième arbre (23) présentant avec la turbine (6) libre un rapport de réduction K2, lesdites roues (24, 26) étant agencées de telle sorte que ladite turbine (6) libre entraîne spontanément ledit générateur (5) de gaz, par le biais desdits arbres et desdites roues libres, dès que ledit rapport (NGG/NTL) des vitesses est inférieur au rapport K2/K1.

11. Hélicoptère bimoteur **caractérisé en ce qu'**il comprend au moins un turbomoteur selon l'une des revendications 1 à 10.

12. Procédé d'optimisation du régime de super-ralenti à puissance nulle d'un hélicoptère bimoteur comprenant au moins un turbomoteur comprenant un générateur (5) de gaz adapté pour être mis en rotation et une turbine (6) libre entraînée en rotation par les gaz dudit générateur (5) de gaz, caractérisé en qu'il comprend une étape de couplage mécanique commandé dudit générateur (5) de gaz et de ladite turbine (6) libre dès que la vitesse de rotation dudit générateur de gaz atteint une vitesse de seuil prédéterminée.

13. Procédé d'optimisation selon la revendication 12, **caractérisé en ce qu'**il comprend en outre une étape de couplage mécanique spontané dudit générateur de gaz et de la turbine libre dès que le rapport de la vitesse (NGG) de rotation dudit générateur (5) de gaz par la vitesse (NTL) de rotation de ladite turbine (6) libre atteint une valeur seuil prédéterminée.

## Patentansprüche

1. Wellenturbinentriebwerk, umfassend
einen Gasgenerator (5), der angepasst ist, um in Drehung versetzt zu werden,
- eine freie Turbine (6), die von den Gasen des Gasgenerators zum Drehen gebracht wird, und
- eine gesteuerte mechanische Kupplungsvorrichtung (40) des Gasgenerators (5) und der freien Turbine (6), die angepasst ist, um den Gasgenerator (5) und die freie Turbine (6) mechanisch und auf Befehl zu verbinden, sobald die Drehzahl des Gasgenerators (5) eine vorbestimmte Grenzdrehzahl erreicht, **dadurch gekennzeichnet, dass** die gesteuerte mechanische Kupplungsvorrichtung (40) angepasst ist, um den Gasgenerator (5) und die freie Turbine (6) mechanisch und auf Befehl zu verbinden, sobald die Drehzahl (NGG) des Gasgenerators (5) niedriger ist als die vorbestimmte Grenzdrehzahl, und um auf Befehl den Gasgenerator (5) und die freie Turbine (6) zu trennen, sobald die Drehzahl (NGG) des Gasgenerators (5) höher ist als die vorbestimmte Grenzdrehzahl.

2. Wellenturbinentriebwerk nach dem vorstehenden Anspruch, **dadurch gekennzeichnet, dass** die Grenzdrehzahl von einer Nenndrehzahl des Gasgenerators (5) abhängig ist.

3. Wellenturbinentriebwerk nach Anspruch 2, **dadurch gekennzeichnet, dass** die Grenzdrehzahl aus dem Intervall [20 %, N1, 60 %, N1] gewählt wird, wobei N1 die Nenndrehzahl des Gasgenerators ist.

4. Wellenturbinentriebwerk nach einem der Ansprüche 1 bis 3, **dadurch gekennzeichnet, dass** die gesteuerte mechanische Kupplungsvorrichtung (40) umfasst:
- Mittel zum Lesen einer Information, die bezeichnend ist für die Drehzahl (NGG) des Gasgenerators,
- Mittel (41) für eine reversible mechanische Kopplung zwischen einer Welle (42), die mechanisch mit dem Gasgenerator verbunden ist, und einer Welle (43), die mechanisch mit der freien Turbine (6) verbunden ist,
- Mittel zur Steuerung der Mittel (41) für die Kopplung in Abhängigkeit von der Information, die bezeichnend ist für die Drehzahl des Gasgenerators, und der Grenzdrehzahl.

5. Wellenturbinentriebwerk nach Anspruch 4, **dadurch gekennzeichnet, dass** die Mittel (41) für die Kopplung aus der Gruppe gewählt werden, umfassend mindestens eine Reibkupplung, eine Klaue und eine Klaue, die mit einem Synchronisator ausgestattet ist.

6. Wellenturbinentriebwerk nach einem der Ansprüche 3 oder 4, **dadurch gekennzeichnet, dass** die Mittel (41) für die Kopplung ausgestaltet sind, ein temporäres Gleiten zwischen der Welle (42), die mechanisch mit dem Gasgenerator (5) verbunden ist, und der Welle (43), die mechanisch mit der freien Turbine (6) verbunden ist, während einer vorausgehenden Kopplungsphase zu ermöglichen.

7. Wellenturbinentriebwerk nach einem der Ansprüche 1 bis 6, **dadurch gekennzeichnet, dass** es weiter eine spontane mechanische Kupplungsvorrichtung (20) des Gasgenerators (5) und der freien Turbine (6) umfasst, die angepasst ist, um den Gasgenerator (5) und die freie Turbine (6) mechanisch und spontan zu verbinden, sobald das Verhältnis der Drehzahl (NGG) des Gasgenerators (5) zu der Drehzahl (NTL) der freien Turbine (6) einen vorbestimmten Grenzwert erreicht.

8. Wellenturbinentriebwerk nach Anspruch 7, **dadurch gekennzeichnet, dass** die spontane mechanische Kupplungsvorrichtung (20) angepasst ist, um den Gasgenerator (5) und die freie Turbine (6) mechanisch und spontan zu verbinden, sobald das Verhältnis der Drehzahlen niedriger ist als der vorbestimmte Grenzwert, und um den Gasgenerator (5) und die freie Turbine (6) spontan zu trennen, sobald das Verhältnis (NGG/NTL) höher ist als der vorbestimmte Grenzwert.

9. Wellenturbinentriebwerk nach einem der Ansprüche 7 oder 8, **dadurch gekennzeichnet, dass** die spontane mechanische Kupplungsvorrichtung (20) mindestens ein freies Rad (21) umfasst, das eine erste Welle (22), die mit dem Gasgenerator ein Untersetzungsverhältnis K1 aufweist, und eine zweite Welle (23), die mit der freien Turbine (6) ein Untersetzungsverhältnis K2 aufweist, verbindet, wobei das freie Rad (21) so angeordnet ist, dass die freie Turbine (6) den Gasgenerator (5) über die Wellen und das freie Rad (21) spontan antreibt, sobald das Verhältnis (NGG/NTL) der Drehzahlen niedriger ist als das Verhältnis K2/K1.

10. Wellenturbinentriebwerk nach Anspruch 9, **dadurch gekennzeichnet, dass** es einen Startergenerator (30) umfasst, der fest mit einer Zwischenwelle (25) verbunden ist, und dadurch, dass die spontane mechanische Kupplungsvorrichtung (20) zwei freie Räder (24, 26) umfasst, die jeweils die Zwischenwelle (25) mit der ersten Welle (22), die mit dem Gasgenerator (5) ein Untersetzungsverhältnis K1 aufweist, und der zweiten Welle (23), die mit der freien Turbine (6) ein Untersetzungsverhältnis K2 aufweist, verbinden, wobei die Räder (24, 26) so angeordnet sind, dass die freie Turbine (6) den Gasgenerator (5) über die Wellen und die freien Räder spontan antreibt, sobald das Verhältnis (NGG/NTL) der Drehzahlen niedriger ist als das Verhältnis K2/K1.

11. Zweimotoriger Helikopter, **dadurch gekennzeichnet, dass** er mindestens ein Wellenturbinentriebwerk nach einem der Ansprüche 1 bis 10 umfasst.

12. Verfahren zur Optimierung der Nullleistungs-Hochleerlaufgeschwindigkeit eines zweimotorigen Helikopters, der mindestens ein Wellenturbinentriebwerk umfasst, das einen Gasgenerator (5), der angepasst ist, um in Drehung versetzt zu werden, und eine freie Turbine (6), die von den Gasen des Gasgenerators (5) zum Drehen gebracht wird, umfasst, **dadurch gekennzeichnet, dass** es einen Schritt der gesteuerten mechanischen Kupplung des Gasgenerators (5) und der freien Turbine (6) umfasst, sobald die Drehzahl des Gasgenerators eine vorbestimmte Grenzdrehzahl erreicht.

13. Verfahren zur Optimierung nach Anspruch 12, **dadurch gekennzeichnet, dass** es weiter einen Schritt der spontanen mechanischen Kupplung des Gasgenerators und der freien Turbine umfasst, sobald das Verhältnis der Drehzahl (NGG) des Gasgenerators (5) zu der Drehzahl (NTL) der freien Turbine (6) einen vorbestimmten Grenzwert erreicht.

## Claims

1. Turbo engine comprising
a gas generator (5) adapted for rotation,
- a free turbine (6) driven to rotate by the gas of said gas generator, and
- a device (40) for controlled mechanical coupling of said gas generator (5) and said free turbine (6) adapted to link said gas generator (5) and said free turbine (6) mechanically and on command as soon as the rotation speed of said gas generator (5) reaches a predetermined speed limit, **characterised in that** said device (40) for controlled mechanical coupling is adapted to link said gas generator (5) and said free turbine (6) mechanically and on command as soon as said rotation speed (NGG) of said gas generator (5) is lower than said predetermined speed limit and to separate said gas generator (5) and said free power turbine (6) on command as soon as said rotation speed (NGG) of said gas generator (5) is higher than said predetermined speed limit.

2. Turbo engine according to the preceding claim, **characterised in that** said speed limit is a function of a nominal speed of said gas generator (5).

3. Turbo engine according to claim 2, **characterised in that** said speed limit is chosen in the interval [20%.N1, 60%.N1], or N1 is said nominal speed of said gas generator.

4. Turbo engine according to one of claims 1 to 3, **characterised in that** said device (40) for controlled mechanical coupling comprises:
- means of reading information representative of said rotation speed (NGG) of said gas generator,
- reversible mechanical coupling means (41) between a shaft (42) connected mechanically to said gas generator and a shaft (43) connected mechanically to said free turbine (6),
- means of controlling said coupling means (41) depending on said information representative of said rotation speed of said gas generator and said speed limit.

5. Turbo engine according to claim 4, **characterised in that** said coupling means (41) is chosen from the group comprising at least a friction coupling, a clutch, and a clutch equipped with a synchroniser.

6. Turbo engine according to one of claims 3 or 4, **characterised in that** said coupling means (41) is configured to allow temporary sliding between the shaft (42) mechanically linked to said generator (5) and the shaft (43) mechanically linked to said free turbine (6) during a preliminary coupling phase.

7. Turbo engine according to one of claims 1 to 6, **characterised in that** it also comprises a device (20) for automatic mechanical coupling of said gas generator (5) and said free turbine (6) adapted to link said gas generator (5) and said free turbine (6) mechanically and automatically as soon as the rotation speed (NGG) ratio of said gas generator (5) by the rotation speed (NTL) of said free turbine (6) reaches a predetermined cut-off value.

8. Turbo engine according to claim 7, **characterised in that** said device for automatic mechanical coupling (20) is adapted to link said gas generator (5) and said free turbine (6) mechanically and automatically as soon as said speed ratio is lower than said predetermined cut-off value and to separate said gas generator (5) and said free turbine (6) automatically as soon as said ratio (NGG/NTL) is higher than said predetermined cut-off value.

9. Turbo engine according to one of claims 7 or 8, **characterised in that** said device for automatic mechanical coupling (20) comprises at least one freewheel (21) connecting a first shaft (22) having a K1 reduction ratio to said gas generator and a second shaft (23) having a K2 reduction ratio to said free turbine (6), said freewheel (21) being arranged in such a way that said free turbine (6) automatically drives said gas generator (5), by means of said shafts and said freewheel (21), as soon as said speed ratio (NGG/NTL) is lower than the K2/K1 ratio.

10. Turbo engine according to claim 9, **characterised in that** it comprises a starter-generator (30) that is integral with an intermediate shaft (25), and **in that** said device for automatic mechanical coupling (20) comprises two freewheels (24, 26) respectively linking said intermediate shaft (25) to said first shaft (22) having a K1 reduction ratio with said gas generator (5) and said second shaft (23) having a K2 reduction ratio with said free turbine (6), said wheels (24, 26) being arranged in such a way that said free turbine (6) automatically drives said gas generator (5), by means of said shafts and said freewheels, as soon as said speed ratio (NGG/NTL) is lower than the K2/K1 ratio.

11. Twin-engine helicopter, **characterised in that** it comprises at least one turbo engine according to one of claims 1 to 10.

12. Method for optimising the super-slow speed of a twin-engine helicopter to zero power comprising at least one turbo engine comprising a gas generator (5) adapted to rotate and a free turbine (6) driven to rotate by the gas of said gas generator (5), **characterised in that** it comprises a controlled mechanical coupling step of said gas generator (5) and said free turbine (6) as soon as the rotation speed of said gas generator reaches a predetermined cut-off value.

13. Optimisation method according to claim 12, **characterised in that** it also comprises an automatic mechanical coupling step of said gas generator and said free turbine as soon as the rotation speed ratio (NGG) of said gas generator (5) by the rotation speed (NTL) of said free turbine (6) reaches a predetermined cut-off value.
